# EUROPÄISCHE PATENTANMELDUNG

(11) **EP 0 535 561 A2**
(43) Veröffentlichungstag der Anmeldung: **07.04.1993**
(21) Anmeldenummer: 92116497.6
(22) Anmeldetag: 26.09.1992
(51) Int. Cl.: H04Q 11/04, H04M 11/06, H04M 11/00

(54) **Schaltungsanordnung zur Übertragung von TEMEX-Daten über eine mit PCM2A-Einrichtungen ausgestattete Anschlussleitung**

(30) Priorität: 28.09.1991 DE 4132416
(71) Anmelder: BOSCH TELECOM ÖFFENTLICHE VERMITTLUNGSTECHNIK GmbH, 65760 Eschborn (DE)
(72) Erfinder: Gamer, Reinhold, Dipl.-Ing., W-6053 Obertshausen (DE)

(57) **Zusammenfassung**

An den zu den Umsetzeinrichtungen (PCM,2TA,PCM,2VA) führenden Enden der analogen Teilnehmerleitungen (TL₁,TL₂), sind Bandpaßfilter (BPF) und Sperrfilter (SF) angeschlossen. Damit werden die TEMEX-Daten von den Sprachsignalen getrennt. Mit den Bandpaßfiltern sind Modems (MD) verbunden, die eine Analog/Digital-Umsetzung bzw. eine Digital/Analog-Umsetzung der TEMEX-Daten vornehmen. Die digitalen Ausgänge und Eingänge der Modems sind direkt mit den Steuereinrichtungen der Umsetzeinrichtungen verbunden. Die TEMEX-Daten (TD) werden mit im Nutzdatenkanal übertragen, während die Sprachsignale in komprimierter Form auf den beiden Nutzdatenkanälen übertragen werden.

## Beschreibung

Die Erfindung betrifft eine Schaltungsanordnung zur Übertragung von TEMEX-Daten über eine mit PCM2A-Einrichtungen ausgestattete
Anschlußleitung nach dem Oberbegriff des Patentanspruchs 1.

In der DE-Zeitschrift "Nachrichten-Elektronik-Telematik " (net special) 1/86 ist ein Aufsatz mit dem Titel : "Die TEMEX-Technik" abgedruckt. Es ist im einzelnen dort beschrieben, welche Übertragungstechnik auf analogen Telefonanschlußleitungen angewendet wird. In einem auf Seite 27 abgedruckten Übersichtsbild ist dargestellt, daß auf der Teilnehmerseite einer Anschlußleitung ein sogenannter TEMEX-Netzabschluß (TNA) angeordnet ist, und daß am vermittlungsseitigen Ende dieser Anschlußleitung eine sogenannte TEMEX-Übertragungseinrichtung(TÜE) vorgesehen ist. Damit der Fernsprechbetrieb auf derartigen analogen Anschlußleitungen nicht beeinträchtigt wird, werden zur TEMEX-Datenübertragung Trägerfrequenzen angewendet, welche oberhalb des für den Fernsprechbetrieb vorgesehenen Frequenzbandes liegen. Beim TEMEX-Netzabschluß werden mit Hilfe eines Steuerrechners Kontaktschnittstellen zu Fernwirkendgeräten und die dynamischen Schnittstellen zu Fernwirkendeinrichtungen angesteuert. Auf der Vermittlungsseite befinden sich sogenannte TEMEX-Zentralen (TX), von wo aus TEMEX-Daten gesendet und empfangen werden können. Eine derartige Übertragungstechnik, wie sie für analoge Anschlußleitungen vorgesehen ist, kann nicht ohne weiteres auf digital betriebenen Anschlußleitungen angewendet werden.

In einem Sonderdruck der Firma kabelmetal electro GmbH, Hannover, der anschließlich der VDPI-Tagung am 5./6. März 1987 erschienen ist, wird ein mit PCM2D bezeichnetes heute verfügbares System für Festverbindungen zwischen ISDN-Basis-Anschlüssen beschrieben. Für Teilnehmeranschlußleitungen und Vermittlungssysteme mit analogen Schnittstellen ist ein sogenanntes PCM2A-System vorgesehen, welches ab Seite 4.16 unter Punkt 7 beschrieben wird. Die dafür notwendigen Funktionseinheiten werden mit PCM2TA für die Teilnehmerseite, bzw. Endgeräteseite, und mit PCM2VA für die Vermittlungsseite bezeichnet. Zu den analog betriebenen Schnittstellen der angeschlossenen Endgeräte und der Vermittlungsanlage hin werden Signalisierungen und Nutzinformationen so ausgetauscht, wie dies bei analog betriebenen Leitungen bekannt ist. Die zwischen den Funktionseinheiten PCM2TA und PCM2VA liegende Strecke wird durch digitale Übertragung in genau der gleichen Weise überbrückt, wie dies beim digitalen PCM2D-System der Fall ist. Dabei werden jeweils zwei analoge Anschlußleitungen zu einer digitalen Übertragungsstrecke zusammengefaßt.

Die Aufgabe der Erfindung besteht darin, eine Schaltungsanordnung anzugeben, womit es möglich ist, eine TEMEX-Übertragungstechnik, so wie sie in der ersten Literaturstelle für analoge Anschlußleitungen beschrieben wird, auf Übertragungsstrecken einzusetzen, die mit einem digitalen System für Festverbindungen ausgestattet sind. Mit einem Minimum an Aufwand soll erreicht werden, daß das Prinzip der Einkopplung und Auskopplung von TEMEX-Daten und das digitale Übertragungsprinzip unverändert beibehalten werden können.

Zur Lösung dieser Aufgabe ist eine Merkmalskombination vorgesehen, wie sie im Patentanspruch 1 angegeben ist.

Damit wird in vorteilhafter Weise erreicht, daß bestehende analoge TEMEX-Übertragungssysteme ohne weiteres nachträglich mit einem PCM2A-System ausgestattet werden können. Ebenso kann eine mit einem PCM2A-System bereits ausgestattete Übertragungsstrecke nachträglich für TEMEX-Übertragung eingerichtet werden.

Weiterbildungen der Erfindung ergeben sich aus den Unteransprüchen.

Ein Ausführungsbeispiel der Erfindung wird nachfolgend anhand von Zeichnungen näher erläutert.

Es zeigt:
- Fig. 1: das Übersichtsschaltbild einer TEMEX-Übertragung mit einer PCM2A-Festverbindung,
- Fig. 2: die Einkopplung der TEMEX-Daten innerhalb einer PCM2A-Umsetzeinrichtung.

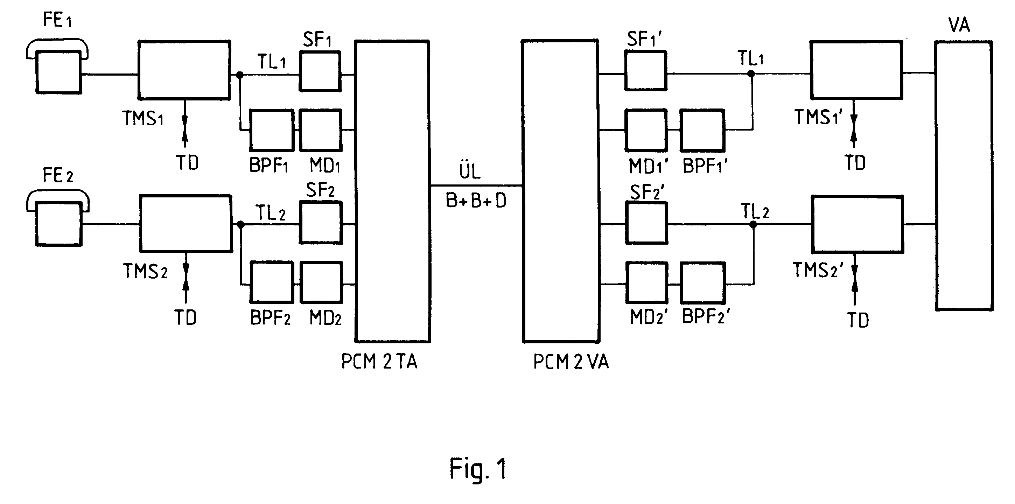

In der Fig. 1 ist dargestellt, wie die von einer Vermittlungsanlage VA kommenden analogen Teilnehmerleitungen TL1 und TL2, an welche Fernsprechendgeräte FE1 und FE2 angeschlossen sind, mit Einrichtungen zur Übertragung von TEMEX-Daten TD ausgestattet sind. Hierzu sind an beiden Enden einer jeden Teilnehmerleitung TL1 und TL2 TEMEX-Schnittstellen TMS angeordnet. Innerhalb dieser Schnittstellen TMS findet eine Einkopplung bzw. Auskopplung von TEMEX-Daten statt, wie dies in der erstgenannten Literaturstelle "net special" beschrieben ist.

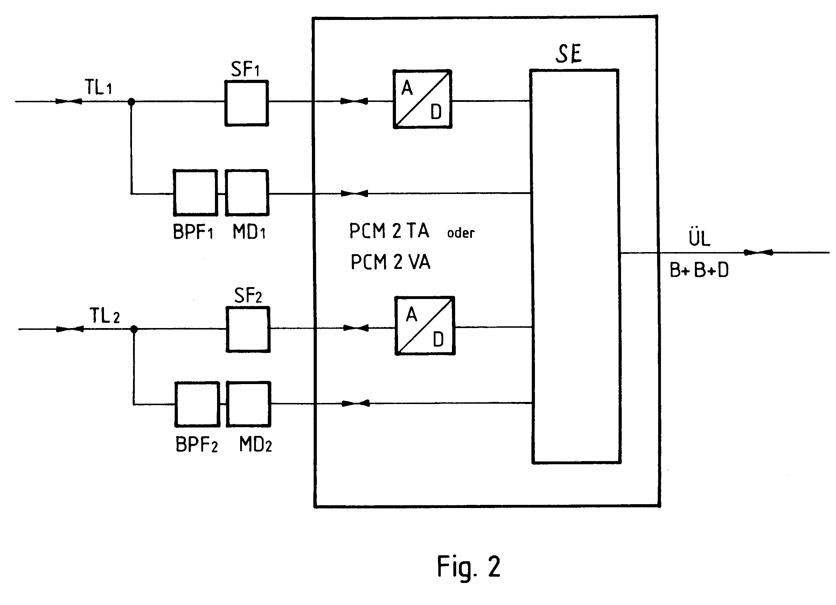

Zwischen einer jeden TEMEX-Schnittstelle TMS und der zugehörigen Umsetzeinrichtung PCM2TA, bzw. PCM2VA, wie sie für die digitale Übertragung bei einer PCM2A-Festverbindung eingesetzt sind, sind Sperrfilter SF und Bandfilter BPF angeordnet. Die Bandfilter BPF sind außerdem mit Modems MD zur jeweiligen Umsetzeinrichtung PCM2TA, bzw. PCM2VA hin verbunden. Die Sperrfilter SF sind so ausgelegt, daß sie für Frequenzen, die höher sind als das Fernsprechband von 300 bis 3400 Hz nicht durchlässig sind. Damit werden die mit höheren Frequenzen beaufschlagten Daten von den Sprechkanälen ferngehalten. Die Bandpaßfilter BPF sind so ausgelegt, daß sie nur durchlässig sind für die mit höheren Frequenzen übertragenen TEMEX-Daten. In dem jeweils einem Bandpaßfilter BPF vorgeschalteten oder nachgeschalteten Modem MD findet eine Analog/Digital-Wandlung, bzw. eine Digital/Analog-Wandlung statt. Die digitalen Eingänge, bzw. Ausgänge der Modems MD sind jeweils direkt mit der zugehörigen Umsetzeinrichtung PCM2TA oder PCM2VA verbunden. Wie anhand der Fig. 2 noch näher erläutert wird, wird dadurch erreicht, daß die TEMEX-Daten in digitaler Form über die Übertragungsleitung ÜL übertragen werden.

In der Fig. 2 ist eine Umsetzeinrichtung PCM2TA oder PCM2VA schematisch dargestellt. Die digitalen Ein- und Ausgänge der Modems MD1 und MD2 sind auf direktem Wege an die Steuereinrichtung SE angeschlossen. Auf diesem Weg werden die digitalisierten TEMEX-Daten direkt dieser Steuereinrichtung SE angeboten bzw. von dieser ausgegeben. Die TEMEX-Daten werden bei komprimierter Sprachübertragung mit im jeweiligen B-Kanal übertragen. Dabei werden vier Übertragungskanäle mit je 32KBit/s eingerichtet. Zwei davon nehmen das ursprüngliche Sprachsignal auf, während die anderen für die Übertragung der TEMEX-Daten benutzt werden. Die Qualität der Sprachkanäle wird dabei nicht wesentlich verringert.

Durch das Einschalten von Sperrfiltern SF, Bandpaßfilter BPF und Modems MD an der jeweils von der Übertragungsleitung ÜL abgewandten Seite der Umsetzeinrichtungen PCM2-TA und PCM2VA wird erreicht, daß bereits bestehende PCM2A-Festverbindungen nachträglich für eine TEMEX-Datenübertragung ausgerüstet werden können, ohne daß am Übertragungsprinzip Änderungen erforderlich sind. Umgekehrt können bereits bestehende analoge TEMEX-Datenübertragungswege nachträglich mit einer PCM2A-Übertragungsstrecke ausgestattet werden, ohne daß an den jeweiligen Endpunkten Änderungen erforderlich sind.

## Patentansprüche

1. Schaltungsanordnung zur Übertragung von TEMEX-Daten über mit PCM2A-Einrichtungen ausgestattete Anschlußleitungen, wobei am teilnehmerseitigen Ende der Übertragungsleitung eine Umsetzeinrichtung PCM2TA und am vermittlungsseitigen Ende eine Umsetzeinrichtung PCM2VA angeschlossen ist und zwischen diesen Umsetzeinrichtungen eine digitale Übertragung stattfindet und dabei jeweils analoge Teilnehmerleitungen zusammengefaßt werden,
**dadurch gekennzeichnet**,
daß an den zu den Umsetzeinrichtungen (PCM2TA und PCM2VA) führenden Enden der analogen Teilnehmerleitungen (TL) Bandpaßfilter (BPF) und Sperrfilter (SF) angeschlossen sind, womit die TEMEX-Daten von Sprachsignalen getrennt werden,
daß mit den Bandpaßfiltern (BPF) Modems (MD) verbunden sind, die eine Analog/Digital-Umsetzung bzw. eine Digital/Analog-Umsetzung der TEMEX-Daten vornehmen,
daß die digitalen Ausgänge und Eingänge der Modems (MD) direkt mit den Steuereinrichtungen (SE) der Umsetzeinrichtungen (PCM2TA und PCM2VA) verbunden sind,
und daß die TEMEX-Daten im komprimierten Nutzkanal (B)übertragen werden, während die Sprachsignale in komprimierter Form ebenfalls auf den Nutzdatenkanälen (B) übertragen werden.

2. Schaltungsanordnung nach Anspruch 1,
**dadurch gekennzeichnet**,
daß mit Hilfe der Umsetzeinrichtungen (PCM2TA und PCM2VA) zwei voneinander unabhängige Übertragungsstrecken für TEMEX-Daten auf einer Übertragungsleitung (ÜL) gebildet werden können.

3. Schaltungsanordnung nach Anspruch 1,
**dadurch gekennzeichnet**,
daß digital anfallende TEMEX-Daten zuvor in eine analoge Form gebracht werden, um die Übertragungsstrecke mit den Umsetzeinrichtungen (PCM2TA und PCM2 VA) unverändert benutzen zu können.

4. Schaltungsanordnung nach Anspruch 1,
**dadurch gekennzeichnet**,
daß TEMEX-Daten im Signalisierungskanal (D) übertragen werden, wenn die Bitrate entsprechend niedrig ist.
